# EUROPEAN PATENT APPLICATION

(11) **EP 2 290 902 A1**
(43) Date of publication of application: **02.03.2011**
(21) Application number: 09305794.1
(22) Date of filing: 28.08.2009
(51) Int. Cl.: H04L 29/06

(54) **A system and a method for transferring data from a server to a client, a server, a computer program and a computer program product**

(71) Applicant: Alcatel Lucent, 75008 Paris (FR)
(72) Inventor: Steiert, Jonathan, 73033 Göppingen (DE); Hochberger, Nico, 70197 Stuttgart (DE); Drewniok, Marc, 73728 Esslingen (DE); Sienel, Jürgen, 71220 Leonberg (DE)
(74) Representative: Brose, Gerhard

(57) **Abstract**

The invention concerns a method for transferring information between a server (101) and a client (102), wherein a first piece of information, in particular application data or an identifier of said application data, is transferred from said server (101) to said client (102) depending on an instruction for said client (102).

## Description

### Background of the invention

The invention relates to a method for transferring information between a client and a server according to the preamble of claim 1, a system according to the preamble of claim 8, a client according to the preamble of claim 10, a server according to the preamble of claim 11, a computer program according to the preamble of claim 12 and a computer program product according to the preamble of claim 13.

### Short description of the state of the art

Transfer of information from a server to a client is a common procedure in today's telecommunications networks. More and more use cases concerning the transfer of information depending on a location of the client emerge. A location based service is one example of the recent past.

An example for the implementation of such transfer of information stored on a server from that server to a client, depending on the location of the client is known for example from the not published European Patent Application 09305759.4.

EP 09305759.4 describes that transferring of a piece of information, like tourist information, from the server to the client is requested by the client. In response to this request, the transfer of this information is permitted or not, depending on the position of the client. This way the piece of information requested by the client, e.g. tourist information, is selected by the server and sent to the client depending on the location of the client, e.g. the sight the tourist is standing at.

However with the method described in EP09305759.4 only the location may be used as differentiator only upon request by the client.

The object of the invention is thus, to provide a more flexible method, in which information on the client is changed, removed or updated independently from a request by the client, depending on information like location of the client, time or user identification.

### Summary of the invention

This object is achieved by a method according to the teaching of claim 1, a system according to the teaching of claim 8, a client according to the teaching of claim 10, a server according to the teaching of claim 11, a computer program according to the teaching of claim 12 and a computer program product according to the teaching of claim 13.

The main idea of the invention is to transfer information between a server and a client wherein a first piece of information, in particular application data or an identifier of said application data, is transferred from said server to said client depending on an instruction for said client.

Advantageously said first piece of information, in particular said application data, is stored as a second piece of information, in particular a copy of said application data, on said client, in particular on a first storage. This means that said application data is transferred from said server to said client and stored there for further usage.

Advantageously a second piece of information, in particular a copy of said application data, is stored on said client, in particular on a first storage, and said second piece of information is removed from said client upon receipt of said first piece of information, in particular said identifier of said application data. This means that said copy of said application data is removed from said client upon request by said server. To identify said copy of said application data on said client, said identifier is transferred to said client.

Further developments of the invention can be gathered from dependent claims and the following description.

### Brief description of the drawings

In the following the invention will be explained further making reference to the attached drawings.
Figure 1 schematically shows a system wherein the invention can be implemented.
Figure 2 schematically shows a first flowchart, showing some typical steps in a first method according to the invention.
Figure 3 schematically shows a second flowchart, showing some typical steps in a second method according to the invention.
Figure 4 schematically shows a third flowchart, showing some typical steps in a third method according to the invention.

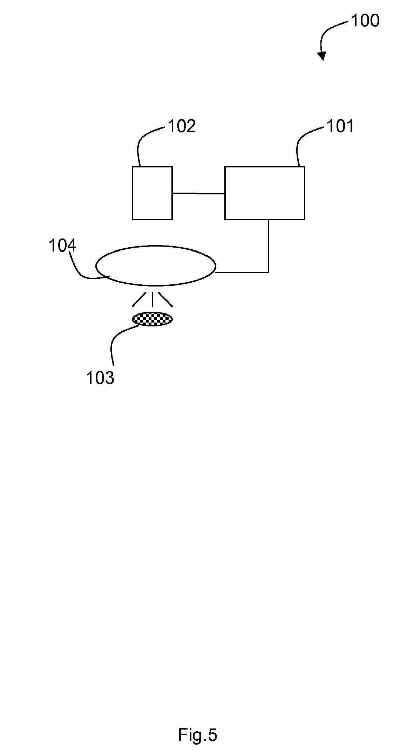

Figure 5 schematically shows a system wherein the invention can be implemented.

### Detailed description of the invention

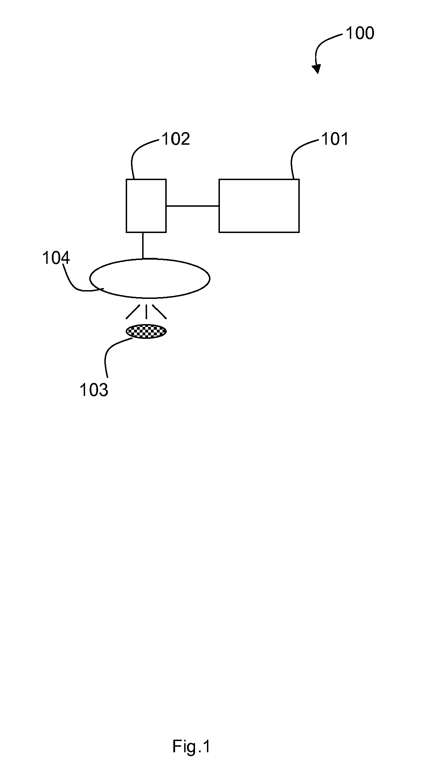

A first example of an embodiment of the invention is described making reference to figure 1.

Figure 1 schematically shows a system 100 comprising a server 101, a client 102, a tag 103 and a sensor 104.

Said server 101 and said client 102 are connected via a data link, for example a global system for mobile communication connection (well known as GSM connection) using general packet radio service (well known as GPRS).

Alternatively said data link between said server 101 and said client 102 may be a wireless local area network (well known as WLAN) or any other data link.

Such data links are well known to persons skilled in the art and are not described further here.

Said server 101 is adapted to send a first piece of information, e.g. application data, or an identifier of said application data.

Said client 102 is adapted to receive said first piece of information, e.g. said application data or said identifier of said application data.

Furthermore said client 102 is adapted determine whether said application data or said identifier of said application data was received.

Additionally said client 102 is adapted to store said first piece of information as second piece of information, e.g. a copy of said application data on a first storage, e.g. a solid state disk or a hard disk, in case said client 102 determined that said application data was received.

Additionally said client 102 is adapted to remove said copy of said application data from said first storage, in case said client 102 determined that said identifier of said application data was received, and said copy of said application data identified by said identifier is actually stored on said first storage.

According to said first example said sensor 104 is connected to said client 102.

Said sensor 104 comprises determination means, for example a central processing unit (well known as CPU) or an application specific integrated circuit (well known as ASIC), adapted to determine a third piece of information.

According to said first example said third piece of information is a user identification stored on said tag 103. Said third piece of information may also be a location of said tag 103, e.g. coordinates according to the global positioning system (well known as GPS) or a room number of a room in a hotel.

Said tag 103 contains said third piece of information stored on a second storage on said tag 103. Said tag 103 may be a two-dimensional barcode or a similar code.

Alternatively said tag 103 may be a radio frequency identification tag (well known as RFID tag).

According to said first example, said user identification is stored as an alphanumeric code on said radio frequency identification tag.

As described before, said sensor 104 is adapted to determine said third piece of information.

Said sensor 104 may be a camera to take a picture of said tag 103 and determine said third piece of information from said picture.

Alternatively said sensor 104 is a radio frequency identification reader (well known as RFID reader) that reads said third piece of information.

Alternatively said sensor 104 may be built into said client 102, e.g. as a finger print reader to establish said user identification or as a camera to read said tag 103. Alternatively or additionally said sensor may be connected to said client 102 or said server 101, e.g. via a universal serial bus (well known as USB) or a telecommunications network.

According to said first example said sensor 104 is said radio frequency identification reader adapted to read said radio frequency identification tag.

According to said first example said client 102 is adapted to receive said user identification from said radio frequency identification reader via said universal serial bus and to determine a first message containing said third piece of information. Said radio frequency identification reader is adapted to send said user identification to said client 102, e.g. by reading and sending a certain memory area of a memory integrated into said sensor 104 that contains said user identification.

Methods for transmitting said third piece of information from said sensor 104 to said client 102 depend on the connection type. Such methods are well known to a person skilled in the art and not explained further here.

Additionally said client 102 is adapted to send said first message to said server 101.

According to said first example, said client 102 reads a first address of said server 101 from a none-volatile storage that is built into said client 102.

Alternatively said client 102 is adapted to broadcast said first message for example using said general packet radio service (GPRS).

According to said first example said first address is an internet protocol address (well known as IP address) of said server 101. Alternatively any other type of addressing may be used particularly in case a data link other than a global system for mobile communication (GSM) is used.

Additionally said server 101 is adapted to receive said first message from said client 102.

Said server 101 is adapted to determine said first piece of information, e.g. application data or said identifier identifying said application data, depending on an instruction for said client 102. Said server 101 is adapted to determine said instruction from said third piece of information.

Said server 101 is adapted to send said identifier to said client 102, in case said instruction indicates that said application data is to be removed from said client 102. Otherwise said server 101 is adapted to look up said application data in said database and send said application data to said client 102.

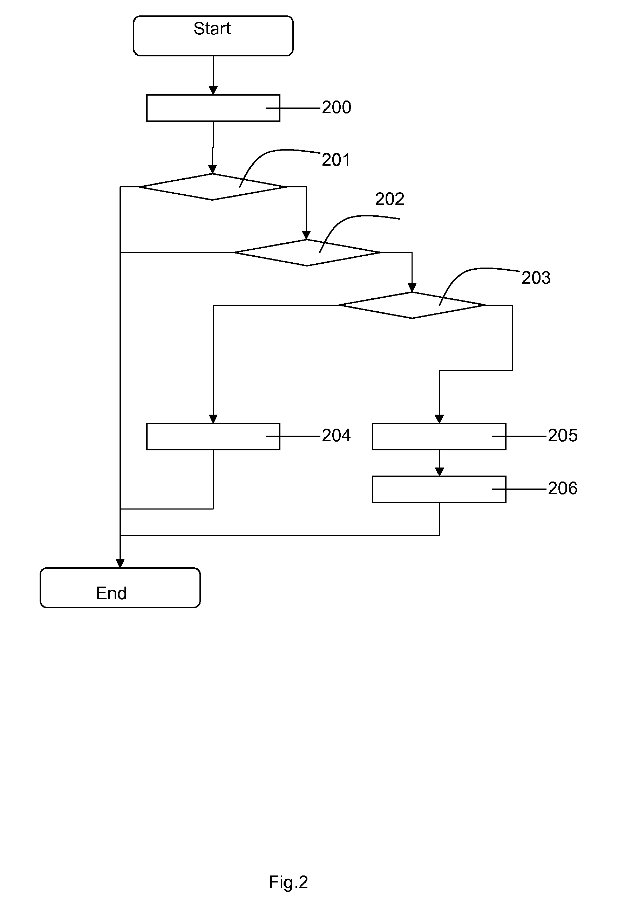

A first method for transferring said piece of information from said server to said client is described below making reference figure 2.

Goal of said first method is to add or remove application data to said client 102. Subsequently executed removal and adding of application data is in said first example considered as updating said application data.

Said first method according to said first example starts whenever said server 101 receives said first message containing said user identification. To that end said server 101 monitors each message received to determine whether said user identification is included. To that end said first message for example includes a first flag indicating that said first message contains said user identification. Afterwards a step 200 is executed.

In said step 200 said user identification is extracted from said first message. Afterwards a step 201 is executed.

In said step 201 a test is performed to determine whether said database contains application data mapped to said user identification. To that end, said server 101 for example looks up said user identification in said data base and determines if any application data or any copy of application data is mapped to said user identification. In case said data base contains application data or one or more copies of application data mapped to said user identification a step 202 is executed. Otherwise no application data is available on said server 101 and no copies of application data are available on said client 102 and said first method ends.

In said step 202 said server 101 determines whether said copy of said application data stored on said first storage on said client 102 matches said application data corresponding to said user identification in said database. To that end, for example a first table containing all identifiers of application data that match said user identification is compared to a second table containing all identifiers of application data that are stored as copy on said first storage. Said identifiers of said application data are for example strings containing the name of said application data. Both tables are for example stored on said server 101 in said database. Therefore no additional traffic between said client 102 and said server 101 is required. In case said copy of said application data matches said application data, the first method ends. Otherwise a step 203 is executed.

In said step 203 said server 101 determines said instruction for said client. Said instruction indicates, whether application data needs to be sent to said client 102 or removed from said client 102. To that end, said server 101 for example compares the content of said first table and said second table. Application data needs to be sent to said client 102, if said first table contains a certain identifier for said application data but said second table does not contain the same identifier. Said copy of said application data needs to be removed from said client 102, if said first table doesn't contain said certain identifier but said second table does. The update case is handled by additional version information that may be part of said identifier. Here said application data needs to be sent to said client 102 if the version number in the first table doesn't match the version number in the second table. In case application data needs to be sent to said client 102, a step 204 is executed. In case said copy of said application data needs to be removed from said client 102 and a step 205 is executed. For the update, first the steps to remove said copy of said application data are executed and then the steps to send said application data are executed.

In said step 204 said application data is sent from said server 101 to said client 102. To that end said server 101 sends said application data to a second address of said client 102. Said second address is for example determined as an internet protocol address (well known as IP address) of said client 102 from said first message. Afterwards said first method ends

In said step 205 said server 101 looks up said identifier of said copy of said application data, for example in said database. Afterwards a step 206 is executed.

In said step 206 said server 101 sends said identifier to said client 102. To that end said server 101 sends said identifier to said second address of said client 102. Afterwards said first method ends.

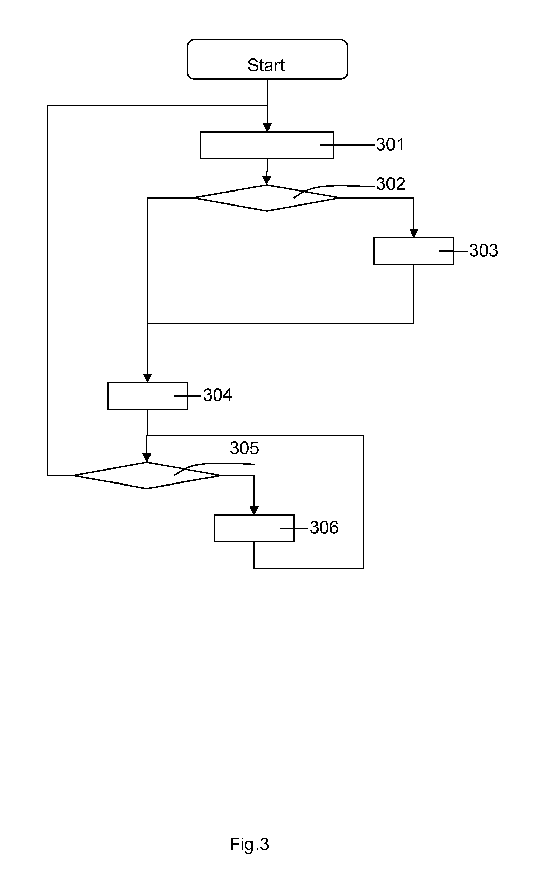

Figure 3 schematically shows some steps in a second method according to the invention. Said second method is for example started on said sensor 104 whenever said sensor 104 is turned on. Alternatively said second method may be started periodically by a scheduler on said sensor 102.

Said second method ends for example any time said sensor 104 is turned off, or in case a battery of said sensor 104 is low.

According to said first example, said sensor 104 is connected to said client 102. In this case, said second method starts when said client 102 is turned on, and ends when said client 102 is turned off.

The goal of said second method is to continuously monitor the surroundings of said sensor 104 and inform said server 101 about said third piece of information available to said sensor 104.

According to said first example, the goal of said second method is, to inform said server 101 when said user identification is read by said sensor 104.

After the start a step 301 is executed.

In said step 301 said client 102 activates said sensor 104 to read said tag 103. Afterwards a step 302 is executed.

In said step 302 a test is performed to determine whether a tag 103 was read.

According to said first example software on said client 102 determines whether said radio frequency identification tag was read. In case said radio frequency identification tag was read, said client 102 determines if said radio frequency identification tag contains said user identification. In case said user identification is determined a step 303 is executed. Otherwise a step 304 is executed.

In said step 304 said client 102 starts a timer. Said timer was initialized with Zero, at the time said client 102 was turned on. For example a variable t is initialized with Zero and stored in an erasable storage on said client. Afterwards a step 305 is executed.

In said step 305 said client 102 determines, whether said timer t exceeds a threshold d, for example d=1 minute. In case said timer t exceeds said threshold d, i.e. t>d, said step 301 is executed. Otherwise a step 306 is executed.

In said step 306 said timer t is incremented, for example t = t+0.1 seconds. Afterwards said step 305 is executed.

In said step 303 said client 102 determines said first message and sends said first message to said server 101. Afterwards said step 304 executed.

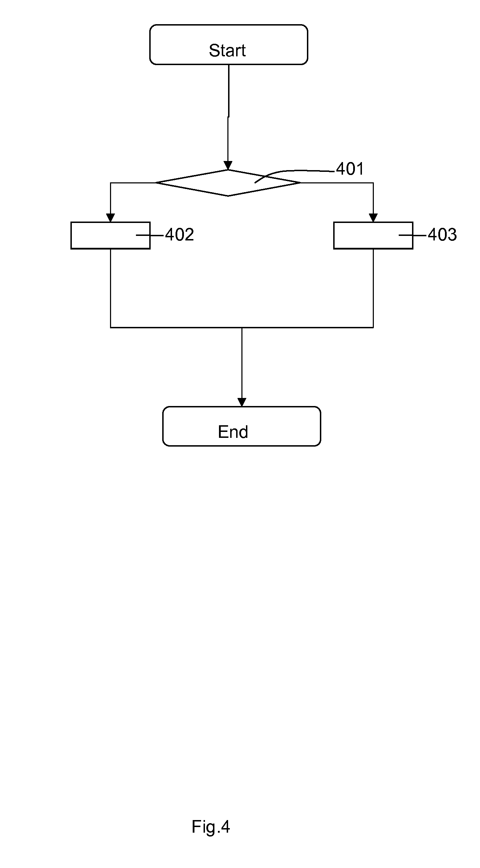

A third method according to the invention is described now making reference to a third example depicted in figure 4.

According to said first example the goal of said third method is to add said copy of said application data to or remove said copy of said application data from said first storage on said client 102.

Said third method starts, whenever said client 102 receives said first piece of information. To that end said client 102 is adapted to receive and monitor messages and determine whether a message received by said client 102 contains said first piece of information. Afterwards a step 401 is executed.

In said step 401 a test is performed to determine whether said first piece of information contains said copy of said application data or said identifier. In case said first piece of information contains said copy of said application data, a step 402 is executed. Otherwise a step 403 is executed.

In said step 402 said copy of said application data received in said first piece of information is stored on said first storage on said client 102. To be able to remove said copy of said application data, said copy of said application data may include said identifier. Said identifier may be stored in a third table on said first storage, together with a storage location of said copy of said application data on said first storage. Afterwards said third method ends.

In said step 403 said copy of said application data, which is identified by said identifier, is removed from said first storage on said client 102. To that end said identifier may be mapped to said storage location on said first storage, e.g. using said third table. Afterwards said third method ends.

Said first piece of information, e.g. application data, is for example a computer program, a widget or any other type of application that may be used on said client 102.

This way, according to said first example a user of said client 102 may receive applications or services depending on said user identification.

A second embodiment of the invention is explained according to a second example, depicted in figure 2. Items shown in figure 2 that correspond to items from figure 1 are labeled identically. For these items, the description of figure 1 holds.

According to said second example said sensor 104 is connected to said server 101. To that end said sensor 104 comprises sending means, adapted to determine and send said first message to said server 101. Furthermore said client 102 neither is adapted to connect to said sensor 104 nor is adapted to determine said first message. The steps of said second method corresponding to connecting to said server 101 and determining said first message are performed by said sensor 104 instead of said client 102.

In said second embodiment, alternatively to said second example, said tag 103 may be part of, e.g. mechanically connected to, said client 102.

Furthermore according to said second embodiment, said tag 103 is optional. Instead said third piece of information may be a location of said client 102 that is determined by means of wireless triangulation in said global system for mobile communications or using said global positioning system for example for cell phones without or with global positioning system sensor respectively.

Said first method may be extended to treat, i.e. add, update or remove application data, multiple clients 102 at the same time. To this end said database may contain additionally a mapping of said third piece of information to a set of said clients 102. The treatment of said clients 102 is then performed depending on an individual comparison of said application data and said copy of said application data. To that end the first method described above contains multiple second tables, e.g. one per client 102, and a program loop that is repeated until each client 102 contained in said set of clients 102 has been treated.

Additionally or alternatively said database may contain different instances of said application data for each type of client 102. In particular said server 101 may be adapted to select said application data for said client 102 depending on said third piece of information and on said type of client 102. Said type of client 102 is for example sent in said first message or may be stored in said database as attribute to said user identification.

The examples described above explain methods using said user identity. Additionally or alternatively combinations combination of time, location and identity may be used, e.g. to reconfigure a mobile device differently for a user, depending on whether said user is at home in the evening or in the office during the day.

Additionally said server 101 and said client 102 may be adapted to transfer said copy of said application data at least partially back to said server 101 before removing it from said client 102. This way user profiles for specific applications may be saved on said server 101.

Additionally said client 102 may be adapted to remove said copy of said application data only partially. This way user profiles for specific applications may be saved on said client 102.

Additionally or alternatively said first piece of information may be sent to said client from a server other than said server 101.

Said database may be set up and filled with the corresponding information by an operator of said telecommunication network at the time a new client 102 is added to said telecommunication network. Alternatively an interface to said data base may be provided to allow said user of said client 102 access to configure said database.

Said application data may be added, updated or removed to /from said data base at any time.

To perform the tasks described in any of said methods, a computer program for transferring information is implemented and stored on a computer program product. Said computer program is adapted to transfer information between said server 101 and said client 102 when executed on a computer. Said computer program causes the computer to transfer said first piece of information, in particular application data or said identifier of said application data, from said server 101 to said client 102 depending on said third piece of information, in particular location, time or user identification, received by said server 101.

## Claims

1. A method for transferring information between a server (101) and a client (102), **characterized in that** a first piece of information, in particular application data or an identifier of said application data, is transferred from said server (101) to said client (102) depending on an instruction for said client (102).

2. The method according to claim 1, **characterized in that** said first piece of information, in particular said application data, is stored as a second piece of information, in particular a copy of said application data, on said client (102), in particular on a first storage.

3. The method according to claim 1, **characterized in that** a second piece of information, in particular a copy of said application data, is stored on said client (102), in particular on a first storage, and that said second piece of information is removed from said client (102) upon receipt of said first piece of information, in particular said identifier of said application data.

4. The method according to claim 1, **characterized in that** said instruction is determined depending on a third piece of information, in particular determined by a sensor (104) in particular depending on a location of a tag (103), a time or a user identification.

5. The method according to claim 4, **characterized in that** said third piece of information is received by said server (101).

6. The method according to claim 4, **characterized in that** said third piece of information is read, from a second storage, in particular a tag (103).

7. The method according to claim 1, **characterized in that** said first piece of information is selected by said sever 101 depending on a type of said client (102).

8. A system for transferring information between a server (101) and a client(102), **characterized, in that** said server (101) and said client (102) are adapted to transfer said information, **in that** said server (101) is adapted to determine a first piece of information, in particular application data or an identifier of said application data, depending on an instruction for said client (102), and **in that** said server (101) is adapted to send said first piece of information to said client (102).

9. The system according to claim 8, further comprising a sensor (104), said sensor (104) being adapted to determine a third piece of information, in particular from a second storage, in particular a tag (103).

10. A client (102) for transferring information between said client (102) and a server (101), **characterized, in that** said client (102) is adapted to receive a first piece of information, in particular application data or an identifier of said application data.

11. A server (101) for transferring information between a client (102) and said server (101), **characterized, in that** said server (101) is adapted to determine a first piece of information, in particular application data or an identifier of said application data, depending on an instruction for said client (102), and **in that** said server (101) is adapted to send said first piece of information to said client (102).

12. A computer program for transferring information, adapted to transfer information between a server (101) and a client (102), wherein said computer program, when executed on a computer, causes the computer to transfer a first piece of information, in particular application data or an identifier of said application data, from said server (101) to said client (102) depending on an instruction for said client (102).

13. A computer program product for transferring information, adapted to transfer information between a server (101) and a client (102), comprising a computer usable medium having a computer readable program, wherein said computer readable program, when executed on a computer, causes the computer to transfer a first piece of information, in particular application data or an identifier of said application data, from said server (101) to said client (102) depending on an instruction for said client (102).

## Amended claims

### Amended claims in accordance with Rule 137(2) EPC.

**1.** A method for transferring information between a server (101) and a client (102), wherein a first piece of information, in particular application data or an identifier of said application data, is transferred from said server (101) to said client (102) depending on an instruction for said client (102) **characterized in that** said instruction is determined depending on a third piece of information, said server (101) is informed about said third piece of information available to a sensor (104) and said third piece of information is determined by said sensor (104) by continuously monitoring surroundings of said sensor (104).

**2.** The method according to claim 1, **characterized in that** said first piece of information, in particular said application data, is stored as a second piece of information, in particular a copy of said application data, on said client (102), in particular on a first storage.

**3.** The method according to claim 1, **characterized in that** a second piece of information, in particular a copy of said application data, is stored on said client (102), in particular on a first storage, and that said second piece of information is removed from said client (102) upon receipt of said first piece of information, in particular said identifier of said application data.

**4.** The method according to claim 1, **characterized in that** said instruction is determined depending on a third piece of information determined by a sensor (104) depending on a location of a tag (103), a time or a user identification.

**5.** The method according to claim 4, **characterized in that** said third piece of information is received by said server (101).

**6.** The method according to claim 4, **characterized in that** said third piece of information is read, from a second storage, in particular a tag (103).

**7.** The method according to claim 1, **characterized in that** said first piece of information is selected by said sever 101 depending on a type of said client (102).

**8.** A system for transferring information between a server (101) and a client(102), wherein said server (101) and said client (102) are adapted to transfer said information, in that said server (101) is adapted to determine a first piece of information, in particular application data or an identifier of said application data, depending on an instruction for said client (102), and in that said server (101) is adapted to send said first piece of information to said client (102), **characterized in that** said instruction is determined depending on a third piece of information, said server (101) is informed about said third piece of information available to a sensor (104) and said third piece of information is determined by said sensor (104) by continuously monitoring surroundings of said sensor (104).

**9.** The system according to claim 8, further comprising a sensor (104), said sensor (104) being adapted to determine a third piece of information, in particular from a second storage, in particular a tag (103).

**10.** A client (102) for transferring information between said client (102) and a server (101), wherein said client (102) is adapted to receive a first piece of information, in particular application data or an identifier of said application data, **characterized in that** said instruction is determined depending on a third piece of information, said server (101) is informed about said third piece of information available to a sensor (104) and said third piece of information is determined by said sensor (104) by continuously monitoring surroundings of said sensor (104).

**11.** A server (101) for transferring information between a client (102) and said server (101), wherein said server (101) is adapted to determine a first piece of information, in particular application data or an identifier of said application data, depending on an instruction for said client (102), and in that said server (101) is adapted to send said first piece of information to said client (102), **characterized in that** said instruction is determined depending on a third piece of information, said server (101) is informed about said third piece of information available to a sensor (104) and said third piece of information is determined by said sensor (104) by continuously monitoring surroundings of said sensor (104).

**12.** A computer program for transferring information, adapted to transfer information between a server (101) and a client (102), wherein said computer program, when executed on a computer, causes the computer to transfer a first piece of information, in particular application data or an identifier of said application data, from said server (101) to said client (102) depending on an instruction for said client (102), **characterized in that** said instruction is determined depending on a third piece of information, said server (101) is informed about said third piece of information available to a sensor (104) and said third piece of information is determined by said sensor (104) by continuously monitoring surroundings of said sensor (104).

**13.** A computer program product for transferring information, adapted to transfer information between a server (101) and a client (102), comprising a computer usable medium having a computer readable program, wherein said computer readable program, when executed on a computer, causes the computer to transfer a first piece of information, in particular application data or an identifier of said application data, from said server (101) to said client (102) depending on an instruction for said client (102), **characterized in that** said instruction is determined depending on a third piece of information, said server (101) is informed about said third piece of information available to a sensor (104) and said third piece of information is determined by said sensor (104) by continuously monitoring surroundings of said sensor (104).
